# EUROPEAN PATENT SPECIFICATION

(11) **EP 2 900 492 B1**
(45) Date of publication and mention of the grant of the patent: **22.02.2017**
(21) Application number: 13801775.1
(22) Date of filing: 24.09.2013
(51) Int. Cl.: B60C 15/06, B60C 1/00

(54) **TIRE FOR VEHICLE WHEELS**
REIFEN FÜR FAHRZEUGRÄDER
PNEU POUR ROUES DE VÉHICULE

(30) Priority: 28.09.2012 IT MI20121623; 28.12.2012 US 201261746987 P
(43) Date of publication of application: 05.08.2015
(73) Proprietor: Pirelli Tyre S.p.A., 20126 Milano (IT)
(72) Inventor: GIANNINI, Luca, I-20126 Milano (IT); LOSTRITTO, Angela, I-20126 Milano (IT); MARIANI, Mario, I-20126 Milano (IT)
(74) Representative: Allaix, Roberto
(86) International application number: PCT/IB2013/058800
(87) International publication number: WO 2014/049516

(56) References cited:
- EP-A1- 1 262 338
- EP-A1- 2 179 865
- US-A1- 2006 173 115

## Description

### DESCRIPTION OF THE FIELD OF THE INVENTION

The present invention relates to a tire for vehicle wheels.

In particular, the invention relates to a high-performance tire for the wheels of two-wheeled or four-wheeled vehicles for applications which require high running speeds and/or extreme driving conditions, typically, but not exclusively, tires which are capable of maintaining maximum speeds of at least about 210 km/h or of withstanding maximum loads of at least about 210 kg or a combination thereof. The invention also relates to a tire for the wheels of heavy-goods vehicles.

### PRIOR ART

Tires for vehicle wheels are described in patent applications EP 1 262 338, US 2007/0 006 958, EP 2 179 865 and US 2006/0 173 115 and in patent applications WO 2001/060 643 and WO 2002/096 673 in the name of the Applicant.

### SUMMARY OF THE INVENTION

High-performance tires for vehicle wheels or tires for the wheels of heavy-goods vehicles may be subjected, in their various manoeuvres, to stresses of circumferential, transverse and combined type, of considerable magnitude.

Such stresses are transmitted between the wheel rim and the tire, and vice versa, via the bead structures of the tire, causing deformations and friction.

In order to protect the bead structure from the continuous deformation and friction stresses exerted by the contact with the wheel rim, a layer of elastomeric material, normally defined as the antiabrasive strip, is applied externally relative to the bead structure, such that, once the tire is mounted on the wheel rim, the antiabrasive strip becomes positioned between the bead structure and the rim.

Considering its position and its function, the antiabrasive strip typically comprises a mixture having abrasion resistance and fatigue resistance values which are such that they enable it efficiently to perform the abovementioned protective function.

The Applicant considered that the antiabrasive strip may be a transitional element between the wheel rim, having high stiffness typical of a metallic material (for example steel, aluminium or alloys thereof, or magnesium), and the bead structure, which, as is known, is of much lower stiffness.

Starting from these observations, the Applicant hypothesized that an improvement in the structure and functioning characteristics of a tire at high speeds and/or under extreme driving conditions and/or under high load might be obtained via an increase in the stiffness of the antiabrasive strip.

The Applicant first investigated the possibility of increasing the percentage of sulfur in the elastomeric material of the antiabrasive strip. This solution, although effectively leading to greater stiffness, had, however, as a negative side effect an increase in the fragility of the resulting elastomeric material and reduced tear strength.

The Applicant thus focused its attention on these results and sought to obtain greater stiffness of the elastomeric material of the antiabrasive strip without impairing the other structural characteristics.

The Applicant found that it was possible to obtain tires which have improved performance during use under extreme working conditions by making the antiabrasive strip with an elastomeric material comprising inorganic fibres having nanometric dimensions, preferably inorganic fibres consisting of magnesium and/or aluminium silicates.

The Applicant found that the addition of inorganic fibres having nanometric dimensions to the elastomeric material with which the antiabrasive strip is made resulted in an increase in the performance of the tire under extreme working conditions, in particular as regards the stability and handling, without incurring any problems of fragility or rapid degradation of the tire.

This is surprising considering the fact that the Applicant had noted that the elastomeric material reinforced with the abovementioned magnesium and/or aluminium silicate inorganic fibres having nanometric dimensions showed a large decrease in the dynamic shear modulus as the dynamic strain increased, i.e. a high Payne effect, which was such as to consider the material unsuitable for use in high-performance tires.

A high Payne effect typically involves a loss of reinforcement as the strain increases, which results in a decline in the performance of the tire.

Nevertheless, the Applicant performed tests on tires bearing an antiabrasive strip made with an elastomeric material reinforced with the abovementioned fibres and found, surprisingly, optimum stability and handling performance without the tire becoming fragile in the bead regions.

Thus, according to a first aspect, the present invention relates to a tire for vehicle wheels, comprising:
a carcass structure comprising at least one carcass layer having opposed side edges associated with relative annular reinforcing structures;
- a tread band applied in a radially outer position with respect to the said carcass structure;
- a pair of sidewalls laterally applied onto opposite sides with respect to the said carcass structure; and
- at least one antiabrasive strip applied in an outer position of each of the said annular reinforcing structures;
in which the said at least one antiabrasive strip comprises a crosslinked elastomeric material obtained by crosslinking of a crosslinkable elastomeric composition comprising magnesium and/or aluminium silicate inorganic fibres having nanometric dimensions, in which the said crosslinked elastomeric material has a dynamic elastic modulus value E', at 70°C and at a frequency of 10 Hz, of greater than 8.00 MPa.

Typically, the tire comprises a belt structure applied in a position radially external to the carcass structure.

Preferably, the said crosslinked elastomeric material has a dynamic elastic modulus value E', measured at 23°C and at a frequency of 10 Hz, of greater than 9.00 MPa.

Advantageously, the said crosslinked elastomeric material has a tear strength at 23°C of greater than or equal to 53 N/mm and preferably greater than 58 N/mm.

More particularly, the said crosslinked elastomeric material has an elongation at break value of greater than or equal to 250% and preferably greater than 280%.

Even more particularly, the said crosslinked elastomeric material has a static load value at 100% of elongation (CA1) of greater than or equal to 5 MPa.

The Applicant believes that the increase in stiffness and in tear strength of the crosslinked elastomeric material included in the antiabrasive strip might be obtained via a combined metering of ingredients in the crosslinkable elastomeric composition, for instance vulcanizing agents, accelerators, magnesium and/or aluminium silicate inorganic fibres having nanometric dimensions in replacement for or in addition to other reinforcing fillers.

In the present description, the term "fibre" means an elongated element having a dimension (length) that is much larger than the cross-sectional diameter, and the term "nanometric dimensions" in reference to the inorganic fibres means that the inorganic fibres have a diameter of less than 500 nm.

According to a preferred embodiment, the said crosslinked elastomeric material is obtained by crosslinking a crosslinkable elastomeric composition comprising (a) a diene elastomeric polymer and (b) inorganic fibres with a diameter of less than 100 nm.

Advantageously, the said inorganic fibres have a diameter of between 1 and 100 nm and more preferably between about 5 and about 50 nm.

Preferably, the said inorganic fibres have a length of less than about 10 µm, more preferably between about 0.2 and about 10 µm and even more preferably between about 0.2 and about 5 µm.

Advantageously, the inorganic fibres used in the present invention are chosen from the group consisting of magnesium and/or aluminium silicate fibres, for example sepiolite fibres, paligorskite (also known as attapulgite) fibres or mixtures thereof. Sepiolite inorganic fibres are particularly preferred.

According to a preferred embodiment, the said inorganic fibres are present in the said crosslinkable elastomeric composition in an amount from about 1 phr to about 20 phr and preferably from about 3 phr to about 15 phr.

Advantageously, the said crosslinkable elastomeric composition comprises a vulcanizing agent. Preferably, the said vulcanizing agent comprises sulfur-based vulcanizing systems comprising sulfur or sulfur-bearing molecules (sulfur donors) together with vulcanization accelerators and/or activators. Advantageously, the said crosslinkable elastomeric composition comprises an amount of vulcanizing agent, expressed in phr of sulfur, of greater than 1.5 phr and preferably greater than 2.5 phr. Preferably, the amount of vulcanizing agent, expressed in phr of sulfur, is less than or equal to 5 phr.

According to a preferred embodiment, the said elastomeric composition also comprises (c) a carbon black reinforcing filler.

According to a preferred embodiment, the said elastomeric composition also comprises (d) a silane coupler.

For the purposes of the present description and of the claims that follow, the term "phr" means the parts by weight of a given component of the elastomeric material per 100 parts by weight of the diene elastomeric polymer.

Advantageously, the inorganic fibres are treated with a compatibilizer.

According to a preferred embodiment, the said compatibilizer may be chosen, for example, from quaternary ammonium or phosphonium salts having the general formula (I) 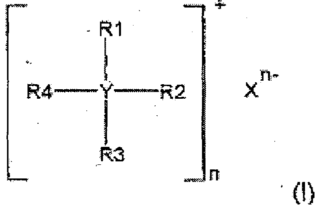 in which:
Y represents N or P;
R1, R2, R3 and R4, which may be identical or different, represent a linear or branched C1-C20 alkyl or hydroxyalkyl group; a linear or branched C1-C20 alkenyl or hydroxyalkenyl group; a group -R5-SH or - R5-NH₂, in which R5 represents a linear or branched C1-C20 alkylene group; a C6-C18 aryl group; a C7-C20 arylalkyl or alkylaryl group; a C5-C18 cycloalkyl group, the said cycloalkyl group optionally containing heteroatoms such as oxygen, nitrogen or sulfur;
Xⁿ⁻ represents an anion such as the chloride ion, the sulfate ion or the phosphate ion;
n represents 1, 2 or 3.

The treatment of the inorganic fibres with the compatibilizer is performed to obtain high dispersion of the silicates in the elastomeric matrix. The silicate, which is typically hydrophilic, is made organophilic by exchange of alkaline cations, for example, with relatively long chains, of quaternary alkylammonium cations, modifying the surface polarity of the silicate. Further details are described, for example, in patents US 4 136 103; US 5 747 560 or US 5 952 093. An example of a inorganic fibre that may be used according to the present invention and that is commercially available is the product known under the name Pangel B5 supplied by Tolsa Group (http://www.tolsa.com/).

According to a preferred embodiment, the diene elastomeric polymer (a) that may be used in the present invention may be chosen from those commonly used in sulfur-crosslinkable elastomeric materials, which are particularly suitable for producing tires, i.e. elastomeric polymers or copolymers with an unsaturated chain having a glass transition temperature (Tg) generally less than 20°C and preferably in the range from 0°C to -110°C. These polymers or copolymers may be of natural origin or may be obtained by solution polymerization, emulsion polymerization or gas-phase polymerization of one or more conjugated diolefins, optionally mixed with at least one comonomer chosen from monovinyl arenes and/or polar comonomers.

The conjugated diolefins generally contain from 4 to 12 and preferably from 4 to 8 carbon atoms and may be chosen, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene and isoprene are particularly preferred.

Monovinyl arenes, which may be optionally used as comonomers, generally contain from 8 to 20 and preferably from 8 to 12 carbon atoms and may be chosen, for example, from: styrene; 1-vinylnaphthalene; 2-vinylnaphthalene; various alkyl, cycloalkyl, aryl, alkylaryl or arylalkyl derivatives of styrene, for instance α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers, which may optionally be used, may be chosen, for example, from: vinylpyridine, vinylquinoline, esters of acrylic acid and of alkylacrylic acid, nitriles, or mixtures thereof, for instance methyl acrylate, ethyl acrylate, methyl methacrylate, ethyl methacrylate, acrylonitrile, or mixtures thereof.

Preferably, the diene elastomeric polymer (a) that may be used in the present invention may be chosen, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutylene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to a preferred embodiment, the said elastomeric composition comprises at least 10% by weight and preferably between 20% by weight and 100% by weight, relative to the total weight of the said at least one diene elastomeric polymer (a), of natural rubber.

The abovementioned elastomeric composition may optionally comprise at least one elastomeric polymer of one or more monoolefins with an olefinic comonomer or derivatives thereof (a'). The monoolefin may be chosen from: ethylene and α-olefins generally containing from 3 to 12 carbon atoms, for instance propylene, 1-butene, 1-pentene, 1-hexene, 1-octene, or mixtures thereof. The following are preferred: copolymers between ethylene and an α-olefin, optionally with a diene; homopolymers of isobutene or copolymers thereof with small amounts of a diene, which are optionally at least partly halogenated. The diene optionally present generally contains from 4 to 20 carbon atoms and is preferably chosen from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

Use may also be made of a diene elastomeric polymer (a) or an elastomeric polymer (a') functionalized by reaction with suitable terminators or couplers. In particular, the diene elastomeric polymers obtained by anionic polymerization in the presence of an organometallic initiator (in particular an organolithium initiator) may be functionalized by reacting the residual organometallic groups derived from the initiator with suitable terminators or couplers, for instance imines, carbodiimides, alkyltin halides, substituted benzophenones, alkoxysilanes or aryloxysilanes.

As described previously, the said elastomeric composition also preferably comprises at least one carbon black reinforcing filler (c).

According to a preferred embodiment, the carbon black reinforcing filler (c) that may be used in the present invention may be chosen from those with a surface area of at least 20 m²/g (determined as the STSA - statistical thickness surface area according to ISO 18852: 2005).

According to a preferred embodiment, the said carbon black reinforcing filler (c) is present in the elastomeric composition in an amount of between 0.1 phr and 120 phr and preferably between about 20 phr and about 90 phr.

As described previously, the said elastomeric composition also preferably comprises at least one silane coupler (d).

According to a preferred embodiment, the silane coupler (d) that may be used in the present invention may be chosen from those containing at least one hydrolysable silane group, which may be identified, for example, by the general formula (II) below:

(R)₃Si-CₙH₂ₙ-X (II)

in which the groups R, which may be identical or different, are chosen from: alkyl, alkoxy or aryloxy groups or halogen atoms, on condition that at least one of the groups R is an alkoxy or aryloxy group; n is an integer between 1 and 6 inclusive; X is a group chosen from: nitroso, mercapto, amino, epoxide, vinyl, imide, chloro, -(S)ₘCₙH₂ₙ-Si(R)₃ or -S-COR, in which m and n are integers between 1 and 6 inclusive and the groups R are defined as above.

Among the silane couplers, those that are particularly preferred are bis(3-triethoxysilylpropyl) tetrasulfide and bis(3-triethoxysilylpropyl) disulfide.

The said couplers may be used in unmodified form or as a suitable mixture with an inert filler (for example carbon black) so as to facilitate their incorporation into the elastomeric composition.

According to a preferred embodiment, the said silane coupler (d) is present in the elastomeric composition in an amount of between 0.01 phr and about 10 phr and preferably between about 0.5 phr and about 5 phr.

At least one additional reinforcing filler may advantageously be added to the elastomeric composition mentioned above, in an amount generally of between 0.1 phr and 120 phr and preferably between about 20 phr and about 90 phr. The reinforcing filler may be chosen from those commonly used for crosslinked products, in particular for tires, for instance silica, alumina, aluminosilicates, calcium carbonate, kaolin, or mixtures thereof.

The silica that may be used in the present invention may generally be a fumed silica or, preferably, a precipitated silica, with a BET surface area (measured according to Standard ISO 5794/1) of between about 50 m²/g and about 500 m²/g and preferably between about 70 m²/g and about 200 m²/g.

The said elastomeric composition may advantageously incorporate a silane coupler (d) so as to interact with the silica optionally present as reinforcing filler and/or the silicates and to bond them to the diene elastomeric polymer during the vulcanization. Examples of silane couplers (d) that may be used are those already described previously.

The crosslinkable elastomeric composition may be vulcanized according to the known techniques, in particular with sulfur-based vulcanizing systems commonly used for diene elastomeric polymers. To this end, after one or more stages of thermomechanical treatment, a sulfur-based vulcanizing agent is incorporated into the materials together with vulcanizing accelerators. In the final treatment phase, the temperature is generally maintained below 120°C and preferably below 100°C so as to avoid any undesired pre-crosslinking.

The vulcanizing agent most advantageously used is sulfur, or sulfur-bearing molecules (sulfur donors), with accelerators and activators known to those skilled in the art.

The activators that are particularly effective are zinc compounds and in particular ZnO, ZnCO₃, zinc salts of saturated or unsaturated fatty acids containing from 8 to 18 carbon atoms, for instance zinc stearate, which are preferably performed *in situ* in the elastomeric composition from ZnO and fatty acid, and similarly BiO, PbO, Pb₃O₄, PbO₂, or mixtures thereof.

The accelerators that are commonly used may be chosen from: dithiocarbamates, guanidine, thiourea, thiazoles, sulfenamides, thiurams, amines, xanthates, or mixtures thereof.

The said elastomeric composition may comprise other commonly used additives, chosen on the basis of the specific application for which the composition is intended. By way of example, the following may be added to the said materials: antioxidants, anti-ageing agents, plasticizers, adhesives, antiozone agents, modifying resins, or mixtures thereof.

In particular, for the purpose of improving the processability, the said elastomeric composition may be supplemented with a plasticizer generally chosen from inorganic oils, plant oils, synthetic oils or mixtures thereof, for instance aromatic oil, naphthenic oil, phthalates, soybean oil, or mixtures thereof. The amount of plasticizer is generally between 0 phr and about 70 phr and preferably between about 5 phr and about 30 phr.

The elastomeric composition may be prepared by mixing together the polymeric components with the reinforcing filler and with the other additives optionally present according to the techniques known in the field. The mixing may be performed, for example, by using an open mixer of the "open-mill" type or an internal mixer of the type with tangential rotors (Banbury®) or with copenetrating rotors (Intermix™), or in continuous mixers of the Ko-Kneader™ type or of the type with twin screws or multiple screws.

The description will be presented hereinbelow with reference to the attached drawings, which are given solely as a guide and are therefore non-limiting, in which:
- figure 1 shows in radial cross section a tire for motor vehicle wheels;
- figure 2 schematically shows a radial section of a tire for motor cycles;
- figures 3a and 3b show a feature of the bead of two tires for motor vehicles after a comparative test.

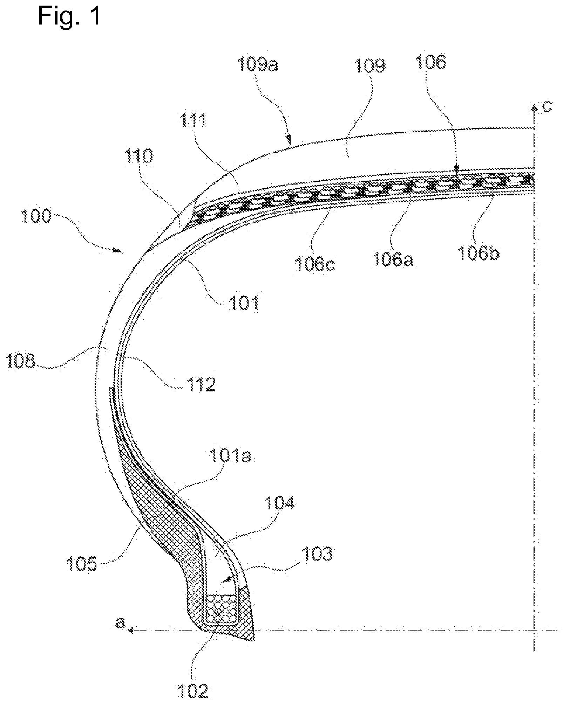

In figure 1,"a" indicates an axial direction and "r" indicates a radial direction. For simplicity, figure 1 shows only a portion of the tire, the remaining portion not shown being identical and arranged symmetrically relative to the radial direction "r".

The tire 100 for four-wheeled vehicles comprises at least one carcass structure, comprising at least one carcass layer 101 having respectively opposite ends fastened to respective annular anchoring structures 102, known as bead wires, optionally combined with a bead filling 104. The region of the tire comprising the bead wire 102 and the filling 104 forms an annular reinforcing structure 103, the "bead", for anchoring the tire onto a corresponding mounting rim, not being shown.

The carcass structure is only of the radial type, i.e. the reinforcing elements of the at least one carcass layer 101 are on planes comprising the axis of rotation of the tire and substantially perpendicular to the equatorial plane of the tire. The said reinforcing elements generally consist of textile cords, for example made of rayon, nylon or polyester (for example polyethylene naphthalate (PEN)). Each annular reinforcing structure is associated with the carcass structure by back-folding of the opposite side edges of at least one carcass layer 101 around the annular anchoring structure 102 so as to form the carcass backfolds 101a as shown in Figure 1.

In one embodiment, the coupling between the carcass structure and the annular reinforcing structure may be provided by means of a second carcass layer (not shown in Figure 1) applied in an axially outer position relative to the first carcass layer.

An antiabrasive strip 105 made with elastomeric material comprising magnesium and/or aluminium silicate inorganic fibres having nanometric dimensions is placed in an outer position relative to each annular reinforcing structure 103.

Preferably, each antiabrasive strip 105 is placed at least in an axially outer position relative to the annular reinforcing structure 103 extending at least between the side wall 108 and the radially lower portion relative to the annular reinforcing structure 103.

Preferably, the antiabrasive strip 105 is placed so as to wrap the annular reinforcing structure 103 along the axially inner and outer and radially lower zones of the annular reinforcing structure 103 so as to be positioned between the latter and the wheel rim when the tire 100 is mounted on the rim.

The carcass structure is associated with a belt structure 106 comprising one or more belt layers 106a, 106b radially superposed one on the other and relative to the carcass layer, having reinforcing cords typically made of metal. These reinforcing cords may be oriented crosswise relative to a direction of circumferential development of the tire 100. The term "circumferential" direction means a direction generally turning in the direction of rotation of the tire.

At least one zero-degree reinforcing layer 106c, commonly known as a "0° belt", which generally incorporates a plurality of reinforcing cords, typically textile cords, oriented in a substantially circumferential direction, thus forming an angle of a few degrees (for example an angle of between 0° and 6°) relative to the equatorial plane of the tire, and coated with an elastomeric material, may be applied in the radially outermost position relative to the belt layers 106a, 106b.

A tread band 109 made of an elastomeric mixture may be applied in a position radially external to the belt structure 106, as other constituent semiprocessed parts of the tire 100.

Respective sidewalls 108 made of an elastomeric mixture are also applied in an axially outer position on the side surfaces of the carcass structure, each extending from one of the side edges of the tread 109 up to the related annular reinforcing structure 103.

In the radially outer position, the tread band 109 has a rolling surface 109a intended to come into contact with the ground. Circumferential grooves, which are connected to transverse incisions (not shown in figure 1) so as to define a plurality of wedges of various shapes and sizes distributed on the rolling surface 109a, are generally made in this surface 109a, which, for simplicity in figure 1, is shown smooth.

A sublayer 111 is placed between the belt structure 106 and the tread band 109.

A belt consisting of an elastomeric material 110, commonly known as a "mini-sidewall", may optionally be present in the connecting zone between the sidewalls 108 and the tread band 109, this mini-sidewall generally being obtained by co-extrusion with the tread band 109 and allowing an improvement in the mechanical interaction between the tread band 109 and the sidewalls 108. Preferably, the end portion of the sidewall 108 directly covers the side edge of the tread band 109.

In the case of tires without an inner tube, a layer of rubber 112, generally known as a "liner", which provides the necessary impermeability to the inflating air of the tire may also be provided in a radially inner position relative to the carcass layer 101.

According to an embodiment not shown, the tire may be a tire for wheels of heavy-goods vehicles, such as trucks, buses, trailers, vans and, in general, for vehicles in which the tire is subjected to a high load.

Preferably, such a tire is suitable for mounting on rims having a diameter of greater than or equal to 17.5 inches for directional wheels or for trailers. A heavy-goods vehicle is, for example, a vehicle of the categories M2, M3, N2, N3, 02, 03 and 04 according to the "ECE Consolidated Resolution of the Construction of vehicles (R.E. 3), Annex 7, Classification and definition of power driven vehicles and trailers" or of the categories M3, N2, N3, 03 and 04 according to "ETRTO Engineering design information" (2010 edition), in the section "General Information", pages G15 and G16, in the chapter "International codes for wheeled vehicle classification as UN/ECE 29/78 and Directive 2003/37". The heavy-goods vehicle category comprises trucks, tractor-trailers, lorries, buses and similar vehicles.

The tire for wheels of heavy-goods vehicles comprises at least one carcass ply, the opposed side edges of which are associated with relative annular reinforcing structures, the "bead" comprising an annular anchoring structure known as a bead wire, and at least one bead filling. The association between the said at least one carcass ply and the said annular reinforcing structure is typically obtained by back-folding the opposed side edges of the said at least one carcass ply around the said annular anchoring structure and the said at least one bead filling so as to form a carcass backfold.

An antiabrasive strip made with elastomeric material comprising magnesium and/or aluminium silicate inorganic fibres having nanometric dimensions is placed in an outer position relative to each annular reinforcing structure.

The said at least one carcass ply generally comprises a plurality of carcass ply reinforcing elements arranged substantially parallel to each other and at least partially coated with a layer of elastomeric material. These carcass ply reinforcing elements, in particular in the case of truck tires, usually comprise metal cords, preferably made of steel.

The said at least one carcass ply is usually of radial type, i.e. it incorporates reinforcing elements arranged in a substantially perpendicular direction relative to the circumferential direction.

A belt structure is applied in a radially outer position relative to the said at least one carcass ply.

The belt structure comprises at least two radially superposed supporting belt layers which incorporate a plurality of reinforcing belt elements, typically metal cords, preferably made of steel. The belt structure may also comprise a zero-degree reinforcing layer applied, for example, in a radially outer position relative to the second supporting belt layer.

The metal cords used in the layers of the belt structure, and in particular those used in the supporting belt layers, comprise a plurality of filaments.

Filaments of the metal cords used in the belt structure (and typically also in other reinforcing layers of the tire) are preferably NT (normal tensile), HT (high tensile), SHT (super high tensile) or UHT (ultra high tensile) steel filaments. Typically, these steel filaments have a carbon content of less than about 1%. Preferably, the carbon content is greater than or equal to about 0.7%. The filaments are typically coated with octone or another corrosion-resistant coating (for example Zn/Mn).

A tread band is applied circumferentially in a radially outer position relative to the said belt structure. Externally, the tread band has a rolling surface that is suitable for coming into contact with the ground.

Circumferential cavities, which may be connected by transverse incisions (not shown), define a tread pattern which comprises a plurality of ribs and/or wedges of various shapes and sizes, distributed on the rolling surface.

A sidewall is applied externally on the carcass ply. The sidewall extends in an axially outer position, from the annular reinforcing structure to the tread band.

A sublayer is placed in the area in which the side edges of the tread band join the sidewall.

An elastomeric layer, generally known as a liner, which provides the necessary impermeability to the inflating air of the tire, may be provided in a radially inner position relative to the carcass ply.

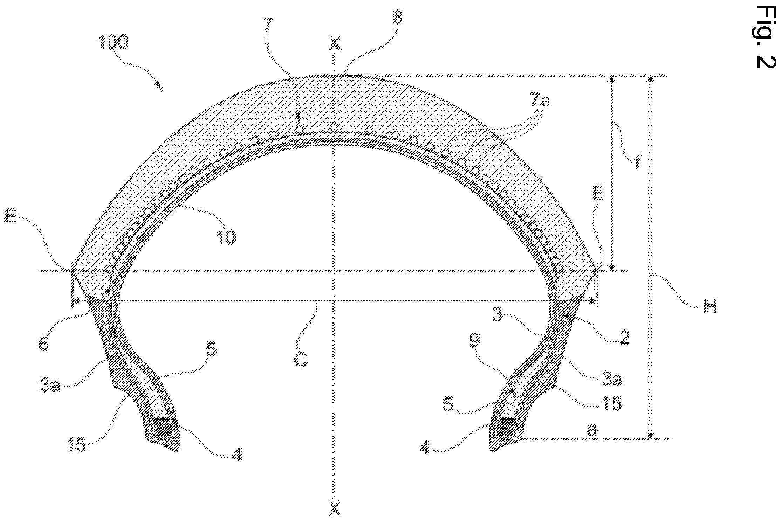

Figure 2 indicates at 100 an entire tire for wheels of motor cycles.

An equatorial plane X-X and an axis of rotation Z (not shown in the figure) are defined in the tire 100. A circumferential direction (indicated in the figures by the arrow f oriented in the direction of rotation of the tire) and an axial direction perpendicular to the equatorial plane X-X are also defined.

The tire 100 comprises a carcass structure 2 including at least one carcass ply 3, made of an elastomeric material and comprising a plurality of reinforcing elements arranged parallel to each other.

The carcass ply 3 is fastened, via its opposed circumferential edges, to at least one annular reinforcing structure 9.

In particular, the opposed side edges 3a of the carcass ply 3 are backfolded around annular anchoring structures 4, known as bead wires.

A tapered elastomeric filling 5 which occupies the space defined between the carcass ply 3 and the corresponding backfolded side edge 3a of the carcass ply 3 is applied to the axially outer perimeter of the bead wires 4.

The zone of the tire comprising the bead wire 4 and the filling 5 forms an annular reinforcing structure 9, the "bead", intended for anchoring the tire to a corresponding mounting rim, not shown.

The antiabrasive strip 15 made of an elastomeric material comprising magnesium and/or aluminium silicate inorganic fibres having nanometric dimensions is placed in an outer position relative to each annular reinforcing structure 9.

Preferably, each antiabrasive strip 15 is placed at least in an axially outer position relative to the annular reinforcing structure 9 extending at least between the sidewall and the radially inner portion of the annular reinforcing structure 9.

Preferably, the antiabrasive strip 15 is arranged so as to envelop the annular reinforcing structure 9 along the axially inner and outer and radially lower zones of the annular reinforcing structure 9 so as to be positioned between the latter and the wheel rim when the tire is mounted on the rim.

The reinforcing elements included in the carcass ply 3 preferably comprise textile cords, chosen from those usually employed in the manufacture of tire carcasses, for example made of nylon, rayon, PET, PEN, with elemental yarns having a diameter of between 0.35 mm and 1.5 mm.

In one embodiment, not shown, the carcass structure has its associated opposed side edges without back-folding to particular annular reinforcing structures provided with two annular inserts. A filling made of elastomeric material may be arranged in an axially outer position relative to the first annular insert. The second annular insert is, however, arranged in an axially outer position relative to the end of the carcass ply. Finally, a further filling which completes the production of the annular reinforcing structure may be provided in an axially outer position relative to the said second annular insert, and not necessarily in contact therewith.

Typically, a belt structure 6 is applied circumferentially on the carcass structure 2, in a radially outer position, on which belt structure is circumferentially superposed a tread band 8, on which, following a pressing operation performed concomitantly with the vulcanization of the tire, are typically made longitudinal and/or transverse cavities, arranged so as to define a desired tread pattern.

The tire 100 may comprise a pair of sidewalls applied laterally on opposite sides to the said carcass structure 2.

Preferably, the tire 100 has a cross section distinguished by a high transverse curvature.

In particular, the tire 100 has a high H section measured, on the equatorial plane, between the crown of the tread band and the keying diameter, identified by the reference liner a, passing through the beads of the tire.

The tire 100 also has a width C defined by the distance between the laterally opposed ends E of its tread and a curvature defined by the particular value of the ratio between the distance f of the crown of the tread by the line passing via the ends E of its tread, measured on the equatorial plane of the tire and the said width C. The ends E of the tread may be formed with a corner.

In the present description and in the claims that follow the term "tires with high curvature" means tires which have a curvature ratio f/C of at least 0.2, preferably f/C ≥ 0.25, for example 0.28. Preferably, the curvature ratio f/C is less than 0.8, preferably f/C ≤ 0.5.

Preferably, the tires have particularly low sidewalls. In other words, the term "tires with low sidewalls or low-profile tires" means tires in which the sidewall height ratio (H-f)/H is less than 0.7, more preferably less than 0.65, for example 0.6.

In a preferred embodiment, the motor cycle tire is intended to be mounted on the rear wheel having cord dimensions substantially between 100 and 260 mm.

In a preferred embodiment, the tire is intended to be mounted on the front wheel of a motor cycle having cord dimensions substantially between 80 and 140 mm.

Preferably, the distance (f) between the radially outer point of the tread and the line passing through the laterally opposite ends of the tread of the front tire may be substantially between 45 and 65 mm. Preferably, the transverse curvature/cord ratio (f/C) may be substantially between 0.35 and 0.70 and even more preferably between 0.35 and 0.60. Preferably, the (total height)/cord ratio (H/C) is substantially between 0.6 and 0.9.

In the case of tubeless tires, the carcass structure 2 is typically coated on its inner walls with a sealing layer, or "liner", consisting essentially of a layer of airtight elastomeric material, which is capable of ensuring hermetic sealing of the tire once it is inflated.

Preferably, the belt structure 6 consists of a layer 7 which has a plurality of circumferential windings 7a arranged axially side by side, formed by a rubber cord or by a strip comprising a number of rubber cords (preferably from two to five), wound in a spiral with a substantially zero angle (typically between 0° and 5°) relative to the equatorial plane X-X of the tire.

Preferably, the belt structure stretches substantially over the entire crown portion of the tire.

In a preferred embodiment, the belt structure 6 may consist of at least two radially superposed layers, each consisting of an elastomeric material reinforced with cords arranged parallel to each other. The layers are arranged such that the cords of the first belt layer are oriented obliquely relative to the equatorial plane of the tire, while the cords of the second layer are also oriented obliquely, but are symmetrically crossed relative to the cords of the first layer (which is known as the "crossed belt").

In both cases, generally, the cords of the belt structure are textile or metal cords.

Preferably, the tire 100 may comprise a layer of elastomeric material 10 placed between the said carcass structure 2 and the said belt structure 6.

The manufacture of the tires 100 as described above may be performed by assembling respective semifinished products on a moulding drum, not shown, by means of at least one assembly device.

At least some of the components intended to form the carcass structure of the tire may be constructed and/or assembled on the moulding drum. More particularly, the moulding drum is suitable for receiving first the optional liner, and then the carcass structure and the antiabrasive strip. Next, devices not shown coaxially fasten around each of the ends of one of the annular anchoring structures, position an outer sleeve comprising the belt structure and the tread band in a position coaxially centred around the cylindrical carcass sleeve and form the carcass sleeve according to a toroidal configuration by means of radial expansion of the carcass structure, so as to bring about its application against a radially inner surface of the outer sleeve.

Following the manufacture of the raw tire, a pressing and vulcanization treatment is performed in order to give the tire structural stabilization by means of crosslinking of the elastomeric mixtures and also to print on the tread band a desired tread pattern and to print optional distinctive graphics on the sidewalls.

The present invention will be further illustrated hereinbelow by means of a number of preparation examples, which are given purely as a guide and with no limitation of this invention.

### EXAMPLE 1

The elastomeric materials reported in Table 1 were prepared in the following manner (the amounts of the various components are indicated in phr).

All the components, with the exception of the sulfur, the accelerator (TBBS) and the retarder (PVI) were mixed together in an internal mixer (Pomini PL 1.6 model) for about 5 minutes (first phase). As soon as the temperature reached 145 ± 5°C, the elastomeric composition was discharged. The sulfur, the accelerator (TBBS) and the retarder (PVI) were added and mixing was performed in an open roll mill (second phase).

**TABLE 1**

| SAMPLE | 1 (*) | 2 (**) | 3 (***) |
|---|---|---|---|
| 1st PHASE | | | |
| NR | 70.00 | 70.00 | 70.00 |
| BR | 30.00 | 30.00 | 30.00 |
| CB | 58.00 | 58.00 | 45.00 |
| Pangel B5 | - | - | 16.00 |
| Silane | 1.00 | 1.00 | 1.00 |
| Stearic acid | 2.00 | 2.00 | 2.00 |
| Zinc oxide | 3.00 | 3.00 | 3.00 |
| 6PPD | 2.40 | 2.40 | 2.40 |
| 2nd PHASE | | | |
| TBBS | 1.40 | 1.40 | 1.40 |
| PVI | 0:30 | 0.30 | 0.30 |
| Vulcanizer | 2.00 | 2.76 | 2.76 |

| | | | |
|---|---|---|---|
| (*): reference mixture (**): comparative mixture (***): mixture that is useful in the invention | | | |

- NR: Natural rubber, SMR-GP, Lee Rubber
- BR: Butadiene rubber, Europrene Neocis®, Polimeri Europa
- CB: Carbon black, N375, Cabot
- Silane: Bis[3-(triethoxysilyl)propyl] tetrasulfide, Evonik-Degussa
- Stearic acid: Sogis
- Zinc oxide: Zincol Ossidi
- Pangel B5: Sepiolite modified with quaternary ammonium salt at approximately 20% by weight (16 phr of Pangel B5 corresponding to 13 phr of inorganic filler), Tolsa Group fibre with a length of between 0.2 µm and 2 µm and a diameter of between 5 nm and 30 nm;
- 6PPD: N-(1,3-Dimethylbutyl)-N'-phenyl-p-phenylenediamine, Chemtura Corporation
- TBBS:: N-tert-Butyl-2-benzothiazylsulfenamide, Vulkacit® NZ/EGC, Lanxess
- PVI: Cyclohexylthiophthalimide, Santogard PVI, Flexsys
- Vulcanizer: Sulfur, Redball Superfine, International Sulphur Inc.

The Mooney viscosity ML (1+4) at 100°C was measured, according to standard ISO 289-1:2005, on the non-crosslinked materials, obtained as described above. The results are given in Table 2.

The static mechanical properties (CA05 load at 50% elongation and CA1 load at 100% elongation) according to standard UNI 6065 were measured at various elongations (50%, 100%) on samples of the elastomeric materials mentioned above, vulcanized at 170°C for 10 minutes. The results obtained are given in Table 2.

The MDR rheometric analysis was performed using an MDR Monsanto rheometer. The test was performed at 170°C for 10 minutes with an oscillation frequency of 1.66 Hz (100 oscillations per minute) and an oscillation amplitude of ± 0.5°. The minimum torque (ML) and maximum torque (MH) were measured. The dynamic mechanical properties E' and T an delta were measured using an Instron model 1341 dynamic device in traction-compression mode according to the following methods. A test sample of crosslinked material (170°C for 10 minutes) having a cylindrical shape (length = 25 mm; diameter = 14 mm), compression-loaded beforehand up to a longitudinal deformation of 25% relative to the initial length and maintained at a preset temperature (23°C or 70°C) throughout the test, was subjected to a dynamic sinusoidal stress with an amplitude of ± 3.5% relative to the pre-loaded length, with a frequency of 10 Hz. The dynamic mechanical properties are expressed in terms of the dynamic elastic modulus (E') and Tan delta (loss factor) values. The Tan delta value was calculated as the ratio between the viscous dynamic modulus (E") and the elastic dynamic modulus (E'). The thermoplastic behaviour was evaluated as the difference ΔE' between the elastic dynamic modulus values measured at two reference temperatures selected on the basis of the type of the elastomeric composition and on its application in the tire.

The dynamic mechanical properties G' and Tan delta were also measured using an RPA Alpha Technologies device in shear mode. A sample of crosslinked elastomeric composition (170°C for 10 minutes) in the form of a disc (volume = 5 cm³) was subjected to measurement of the dynamic elastic shear modulus (G') at 70°C, at a frequency of 10 Hz, with a deformation from 0.4% to 10%. The dynamic mechanical properties are expressed in terms of dynamic elastic shear modulus (G') and Tan delta (loss factor) values. The Tan delta value was calculated as the ratio between the viscous dynamic shear modulus (G") and the elastic dynamic shear modulus (G').

The Payne effect was evaluated by means of the difference between the moduli (G') measured at 0.5% and 10% percentage deformations.

The tear strength was measured at 23°C according to the procedure of standard UNI 4914. A sample of particular shape with a slit was subjected to traction, measuring the force necessary to propagate the slit. The result was expressed as the force over the thickness of the sample (N/mm).

The hardness in IRHD degrees (at 23°C and at 100°C) was measured according to standard ISO 48:2007, on samples of the elastomeric materials mentioned above, vulcanized at 170°C for 10 minutes.

**TABLE 2**

| SAMPLE | 1 (*) | 2 (**) | 3 (***) |
|---|---|---|---|
| Viscosity ML (1+4) | 82 | 85 | 81.7 |
| ML (dN m) | 3.42 | 3.66 | 2.93 |
| MH (dN m) | 28.07 | 31.15 | 29.8 |

| STATIC MECHANICAL PROPERTIES | | | |
|---|---|---|---|
| Load at 50% elongation (MPa) | 2.32 | 2.62 | 4.25 |
| Load at 100% elongation (MPa) | 4.64 | 5.38 | 7.83 |
| Breaking load (MPa) | 14.74 | 13.66 | 18.81 |
| Elongation at break (%) | 302.83 | 217.11 | 308.68 |
| Energy (J/cm³) | 21.76 | 13.07 | 31.04 |
| Tear strength at 23°C (N/mm) | 60.0 | 52.4 | 96.0 |

| DYNAMIC MECHANICAL PROPERTIES | | | |
|---|---|---|---|
| E' (23°C - 10 Hz) (MPa) | 8.80 | 9.67 | 13.91 |
| E' (70°C - 10 Hz) (MPa) | 7.59 | 8.44 | 12.06 |
| ΔE' % | 13.7 | 12.7 | 13.3 |
| Tan delta (23°C) | 0.173 | 0.152 | 0.175 |
| Tan delta (70°C) | 0.139 | 0.105 | 0.123 |
| G' 9% (MPa) | 2.16 | 2.22 | 2.13 |
| Tan delta (9%) | 0.185 | 0.17 | 0.207 |
| Payne ΔG' (0.5%-10%) | 3.01 | 2.78 | 3.33 |

| | | | |
|---|---|---|---|
| (*): reference mixture (**): comparative mixture (***): mixture that is useful in the invention | | | |

The data for sample 1 and sample 2 given in Table 2 showed that the increase in the percentage of sulfur, although leading to an increase in the static and dynamic reinforcement values, had the negative side effect of impairing the properties at break with consequent increased fragility, and a reduction in the tear strength.

The data for sample 2 and sample 3 given in Table 2 showed that partial replacement of the carbon black with sepiolite in an equivalent vulcanizing system, although leading to an improvement in all the static mechanical property values (modulus and break), and improved tear strength, had the negative side effect of significantly increasing the hysteresis and the Payne effect.

### EXAMPLE 2

Motor vehicle tires were prepared, containing an antiabrasive strip made of elastomeric material according to sample 1 (reference), sample 2 (comparative) and sample 3 (invention).

The antiabrasive strip was positioned so as to wrap around the annular reinforcing structure (the bead) along the axially inner and outer and radially lower zones of the bead structure, the antiabrasive strip in the finished tire having a maximum height of 60 mm (from the base level of the annular anchoring structures defined by the axis a of figure 1) and a maximum thickness of 4 mm.

Tires of 295/30 R20 size were mounted on the rear of a Porsche 9X1 C2 and tested on a racetrack. The results obtained are given in Table 3.

For the purpose of evaluating the behaviour of the tire, the test driver simulated a number of characteristic manoeuvres (for example lane changing, entering a bend, exiting a bend). Next, the test driver evaluated the behaviour of the tire and awarded a score as a function of the performance of the tire during this manoeuvre.

The tests were performed under extreme driving conditions which define the behaviour of the tire at the grip limit. The test driver then performed manoeuvres which an average driver might be forced to perform in the case of unforeseen and hazardous circumstances: sharp steering at high speed, sudden lane changing to avoid obstacles, sudden braking, and the like.

The test driver evaluated various behaviours, for instance the force on the steering wheel when it is turned sharply; the cornering responsiveness, i.e. the behaviour of the tire when entering a bend at the limit speed; the balancing, i.e. the degree of oversteering or understeering of the vehicle; the efficiency, i.e. the capacity of the tire to absorb a rapid strong transfer of the load when resulting from a sudden lane change without excessive deformation and thus without compromising the stability or handling of the vehicle; the release in bends, i.e. the capacity of the tire to attenuate instability effects deriving from sudden release of the accelerator during a bend taken at the limit speed; the handling, i.e. the capacity of the tire to maintain and/or redress the trajectory of the vehicle after a loss of grip.

Table 3 summarizes the test driver's scoresheet for the handling of the tires. The results of these tests are expressed by means of an evaluation scale which represents the subjective opinion expressed by the test driver via a points system. The values reproduced in the table which follows represent an average value of those obtained in several test sessions (for example 5-6 tests). It should be noted that the scale of values goes from a minimum of 4 to a maximum of 8.

**TABLE 3**

| SAMPLE TIRE | 1 (*) | 2 (**) | 3 (***) |
|---|---|---|---|
| STEERING TESTS | | | |
| Response | 7 | 7 | 7.5 |
| Corner | 7 | 7.5 | 7 |
| Precision | 7 | 7.5 | 7.5 |
| Information | 7.5 | 7.5 | 7.5 |
| Barycentre | 7 | 7 | 7 |
| Force | 7.5 | 7.5 | 7.5 |

| DIRECTIONAL CONTROL | | | |
|---|---|---|---|
| Rear steering | 7 | 7.5 | 7 |
| Rear oscillation | 7 | 7 | 7.5 |
| Understeering | 7 | 7.5 | 7.5 |
| Oversteering | 7 | 7.5 | 7.5 |
| Load transfer | 7 | 7 | 7 |
| Release | 7 | 7.5 | 7.5 |

| STABILITY | | | |
|---|---|---|---|
| Braking linearity | 7.5 | 7.5 | 7.5 |
| Bend acceleration | 7 | 7.5 | 7.5 |

| | | | |
|---|---|---|---|
| (**): comparative tire (***): tire of the invention | | | |

The results reported in Table 3 demonstrate that the tire according to the present invention, Sample 3, despite being obtained with an elastomeric material having a high Payne effect value, showed behaviour in line with that of the comparative tire, Sample 2, and better than that of the reference tire, Sample 1, which was considered as optimal.

For the purpose of evaluating the resistance of the bead in the antiabrasive strip, the tires were subjected to a cycle of mounting/dismounting ten times on a standard 8.8 × 20 rim using a Cemb SM941 tire changer with 500 mm (20 inch) Heyco levers. Each cycle involved mounting on the rim and inflation to 4 bar, followed by deflation and bead removal, and then dismounting from the rim, using the bead removal levers always at the same point.

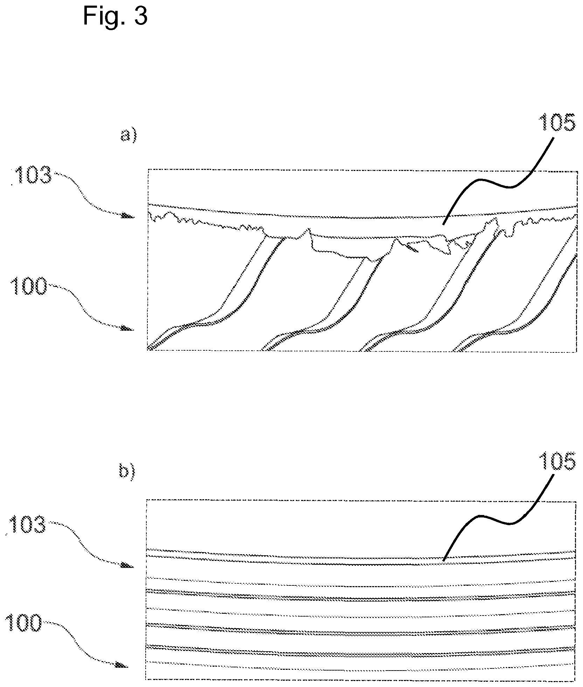

Figures 3a and 3b illustrate the test result. The tire comprising an antiabrasive strip of elastomeric material according to sample 2 (a) shows obvious signs of damage in the region of the bead where the bead removal levers were positioned, which is such as to make it unusable due to the fragility and the reduced tear strength of the elastomeric material used for the antiabrasive strip. In contrast, the tire comprising an antiabrasive strip of elastomeric material according to sample 3 (b) did not show any sign of deterioration.

### EXAMPLE 3

Rear tires for motor cycles containing an antiabrasive strip of elastomeric material according to sample 1 (reference) and according to sample 3 (invention) were prepared.

The object of the test was to confirm that the tire comprising the antiabrasive strip obtained according to sample 3 shows an improvement in performance relative to the reference considered to be optimal, without this test involving deterioration of the tire in the zone of the antiabrasive strip.

The antiabrasive strip was positioned so as to wrap around the annular reinforcing structure (the bead) along the axially inner and outer and radially lower zones of the bead structure, the antiabrasive strip in the finished tire having a maximum height of 55 mm (from the base level of the annular anchoring structures defined by the axis a in figure 2) and a maximum thickness of about 1 mm.

The 120/70 ZR17 sized tires thus prepared were mounted on the front of a Yamaha YZF 1000 R1 motorbike and tested on a racetrack. The results obtained are given in Table 4.

For the purpose of evaluating the behaviour of the tire, the test rider simulated a number of characteristic manoeuvres (for example lane changing, entering a bend, exiting a bend). Next, the test rider evaluated the behaviour of the tire and awarded a score as a function of the performance of the tire during the said manoeuvre.

The tests were performed under extreme riding conditions which define the behaviour of the tire at the grip limit. The test rider then performed manoeuvres which an average rider might be forced to perform in the case of unforeseen and hazardous circumstances: sharp steering at high speed, sudden lane changing to avoid obstacles, sudden braking, and the like.

The test rider evaluated various behaviours that are particularly indicative of the performance of the rear tire, for instance the stability under various conditions, the steering precision and the thrust.

Table 4 summarizes the test rider's scoresheet for the handling of the tires. The results of these tests are expressed by means of an evaluation scale which represents the subjective opinion expressed by the test rider via a points system. The values reproduced in the table which follows represent an average value of those obtained in several test sessions (for example 5-6 tests). It should be noted that the scale of values goes from a minimum of 1 to a maximum of 5.

**TABLE 4**

| SAMPLE TIRE | 1 (*) | 3 (***) |
|---|---|---|
| Acceleration stability | 4 | 3.85 |
| Straight line stability | 4 | 4 |
| Bend stability | 4 | 4 |
| Pudding ⁽¹⁾ | 4 | 4 |
| Front thrust | 3.85 | 4 |
| Rear thrust | 4 | 4 |
| Thrust uniformity | 3.85 | 4 |
| Responsiveness | 3.85 | 4 |
| Lightness in descent | 3.75 | 3.85 |
| Lightness in ascent | 3.75 | 3.85 |
| Transient ⁽²⁾ | 4 | 4.15 |
| Flip flop ⁽³⁾ | 3.75 | 3.85 |
| Bend braking boost | 3.75 | 3.75 |
| Steering precision | 3.75 | 4 |
| Front grip | 3.75 | 3.85 |

| | | |
|---|---|---|
| (*): comparative tire (***): tire of the invention (1): perception of the compactness and solidity of the tire (2): fluidity of steering in transition situations (for example acceleration/braking or right/left cornering) (3): perception of stability in an S-bend (cornering and counter-cornering) | | |

The results given in Table 4 demonstrate that the tire according to the present invention (Sample 3) showed improved behaviour relative to the comparative tire (Sample 1) and in particular showed improved performance on all the indicative points of rear stability and, more generally, of the steering stability of the motor vehicle.

This is all the more surprising considering that the Applicant had found that the addition of the inorganic fibres having nanometric dimensions caused a considerable increase in the Payne effect (as a result of the dynamic modulus from the amplitude of deformation) in the elastomeric material, this increase generally not being considered advantageous since it is typically associated with a reduction in the performance of the tire in relation with the stability of the vehicle.

The Payne effect is observed in the dynamic mechanical tests and is manifested as a result of the dynamic shearer modulus as the dynamic deformation increases.

In this regard, despite the Payne effect discouraging further experiments on the elastomeric material, the Applicant decided to continue, obtaining the optimum result in terms of tire stability and performance.

The motor vehicle tires according to sample 1 and sample 3 were also subjected to a cycle of mounting/dismounting ten times on a standard rim, and, at the end of the test, no particular defects were detected in any of the tires.

This result confirmed that in the case of the tire of sample 3, the increased performance obtained was not gained at the expense of the tear strength of the tire in the zone of the antiabrasive strip.

## Claims

1. Tire (100) for vehicle wheels comprising:
- a carcass structure comprising at least one carcass layer (101) having opposed side edges associated with relative annular reinforcing structure (103, 9);
- a tread band (109, 8) applied in a radially outer position with respect to said carcass structure;
- a pair of sidewalls (108) laterally applied onto opposite sides with respect to said carcass structure;
- at least one antiabrasive strip (105, 15) applied in an outer position of each of said annular reinforcing structure (103, 9);
**characterized in that** said at least one antiabrasive strip comprises a crosslinked elastomeric material obtained by crosslinking of a crosslinkable elastomeric composition comprising magnesium and/or aluminium silicate inorganic fibres having nanometric dimensions, wherein said crosslinked elastomeric material has an elastic dynamic modulus E' value, at 70°C and frequency of 10 Hz, higher than about 8,00 Mpa.

2. Tire for vehicle wheels according to claim 1, wherein said crosslinkable elastomeric composition comprises (a) a diene elastomeric polymer.

3. Tire for vehicle wheels according to claim 1, wherein said crosslinkable elastomeric composition comprises (b) magnesium and/or aluminium silicate inorganic fibres having a diameter of less than 500 nm.

4. Tire for vehicle wheels according to claim 1, wherein said crosslinkable elastomeric composition comprises (b) magnesium and/or aluminium silicate inorganic fibres having a diameter of less than 100 nm.

5. Tire for vehicle wheels according to claim 4, wherein said crosslinkable elastomeric composition comprises (b) magnesium and/or aluminium silicate inorganic fibres having a diameter of from about 5 to about 50 nm.

6. Tire for vehicle wheels according to claim 1, wherein said crosslinkable elastomeric composition comprises (b) magnesium and/or aluminium silicate inorganic fibres having a length less than or equal to about 10 µm.

7. Tire for vehicle wheels according to claim 6, wherein said crosslinkable elastomeric composition comprises (b) magnesium and/or aluminium silicate inorganic fibres having a length from about 0.2 to about 5 µm.

8. Tire for vehicle wheels according to any one of the preceding claims, wherein said inorganic fibres are selected from the group consisting of sepiolite fibres, palygorskite fibres, or mixtures thereof.

9. Tire for vehicle wheels according to claim 8, wherein said inorganic fibres are sepiolite fibres.

10. Tire for vehicle wheels according to any one of the preceding claims, wherein said inorganic fibres are present in said crosslinkable elastomeric composition in an amount of from about 1 phr to about 20 phr.

11. Tire for vehicle wheels according to claim 10, wherein said inorganic fibres are present in said crosslinkable elastomeric composition in an amount of from about 3 phr to about 15 phr.

12. Tire for vehicle wheels according to any one of the preceding claims, wherein said crosslinkable elastomeric composition comprises at least one additional reinforcing filler, in an amount of from about 0.1 to about 120 phr.

13. Tire for vehicle wheels according to any one of the preceding claims, wherein said crosslinkable elastomeric composition comprises a vulcanizing agent, in an amount, expressed as phr of sulfur, higher than 1,5 phr, preferably higher than 2.5 phr.

14. Tire for vehicle wheels according to any one of the preceding claims, wherein said crosslinkable elastomeric composition comprises a vulcanizing agent, in an amount, expressed as phr of sulfur, lower than or equal to 5 phr.

15. Tire for vehicle wheels according to any one of the preceding claims, wherein said crosslinked elastomeric material layer has an elastic dynamic modulus E' value, at 23°C and frequency of 10 Hz, higher than 9,00 MPa.

16. Tire for vehicle wheels according to any one of the preceding claims, wherein said crosslinked elastomeric material layer has a tear strength value at 23°C higher than or equal to 53 N/mm, preferably higher than 58 N/mm.

17. Tire for vehicle wheels according to any one of the preceding claims, wherein said crosslinked elastomeric material layer has a value of elongation at break equal to or higher than 250%, preferably higher than 280%.

18. Tire for vehicle wheels according to any one of the preceding claims, wherein said crosslinked elastomeric material layer has a value of static load at 100% elongation (CA1) equal to or higher than 5 Mpa.

19. Tire for vehicle wheels according to any one of the preceding claims, wherein said at least one antiabrasive strip (105, 15) is applied at least in an axially outer position with respect to the annular reinforcing structure (103, 9), and wherein said at least one antiabrasive strip (105, 15) extends at least from sidewall (108) to the radially lower portion of annular reinforcing structure (103, 9).

20. Tire for vehicle wheels according to any one of the preceding claims, wherein said at least one antiabrasive strip (105, 15) is applied in such a way to wrap the annular reinforcing structure (103, 9) along the radially lower and axially inner and outer areas of annular reinforcing structure (103, 9).

## Patentansprüche

1. Reifen (100) für Fahrzeugräder, umfassend:
- eine Karkassenstruktur mit mindestens einer Karkasslage (101), die gegenüberliegende Seitenkanten aufweist, die mit einer relativ ringförmigen Verstärkungsstruktur (103, 9) verbunden sind;
- ein Laufflächenband (109, 8), das an einer radial äußeren Position in Bezug auf die Karkassenstruktur angebracht ist;
- ein Paar Seitenwände (108), die auf gegenüberliegenden Seiten in Bezug auf die Karkassenstruktur seitlich angebracht sind;
- mindestens einen Abriebschutzstreifen (105, 15), der an einer äußeren Position jeder ringförmigen Verstärkungsstruktur (103, 9) angebracht ist;
**dadurch gekennzeichnet, dass** der mindestens eine Abriebschutzstreifen ein vernetztes Elastomermaterial aufweist, das durch Vernetzen einer vernetzbaren Elastomerzusammensetzung erhalten wird, die anorganische Fasern aus Magnesium- und/oder Aluminiumsilicat umfasst, die Abmessungen im Nanometerbereich haben, wobei das vernetzte Elastomermaterial einen Wert des dynamischen Elastizitätsmoduls E' aufweist, der bei 70 °C und einer Frequenz von 10 Hz höher als etwa 8,00 MPa ist.

2. Reifen für Fahrzeugräder nach Anspruch 1, wobei die vernetzbare Elastomerzusammensetzung (a) ein Dien-Elastomerpolymer umfasst.

3. Reifen für Fahrzeugräder nach Anspruch 1, wobei die vernetzbare Elastomerzusammensetzung (b) anorganische Fasern aus Magnesium- und/oder Aluminiumsilicat umfasst, die einen Durchmesser von weniger als 500 nm haben.

4. Reifen für Fahrzeugräder nach Anspruch 1, wobei die vernetzbare Elastomerzusammensetzung (b) anorganische Fasern aus Magnesium- und/oder Aluminiumsilicat umfasst, die einen Durchmesser von weniger als 100 nm haben.

5. Reifen für Fahrzeugräder nach Anspruch 4, wobei die vernetzbare Elastomerzusammensetzung (b) anorganische Fasern aus Magnesium- und/oder Aluminiumsilicat umfasst, die einen Durchmesser von etwa 5 bis etwa 50 nm haben.

6. Reifen für Fahrzeugräder nach Anspruch 1, wobei die vernetzbare Elastomerzusammensetzung (b) anorganische Fasern aus Magnesium- und/oder Aluminiumsilicat umfasst, die eine Länge von weniger als oder gleich 10 µm haben.

7. Reifen für Fahrzeugräder nach Anspruch 6, wobei die vernetzbare Elastomerzusammensetzung (b) anorganische Fasern aus Magnesium- und/oder Aluminiumsilicat umfasst, die eine Länge von etwa 0,2 bis etwa 5 µm haben.

8. Reifen für Fahrzeugräder nach einem der vorhergehenden Ansprüche, wobei die anorganischen Fasern aus der Gruppe, bestehend aus Sepiolithfasern, Palygorskitfasern oder Mischungen davon, ausgewählt sind.

9. Reifen für Fahrzeugräder nach Anspruch 8, wobei die anorganischen Fasern Sepiolithfasern sind.

10. Reifen für Fahrzeugräder nach einem der vorhergehenden Ansprüche, wobei die anorganischen Fasern in der vernetzbaren Elastomerzusammensetzung in einer Menge von etwa 1 phr bis etwa 20 phr vorliegen.

11. Reifen für Fahrzeugräder nach Anspruch 10, wobei die anorganischen Fasern in der vernetzbaren Elastomerzusammensetzung in einer Menge von etwa 3 phr bis etwa 15 phr vorliegen.

12. Reifen für Fahrzeugräder nach einem der vorhergehenden Ansprüche, wobei die vernetzbare Elastomerzusammensetzung mindestens einen weiteren verstärkenden Füllstoff in einer Menge von etwa 0,1 bis etwa 120 phr umfasst.

13. Reifen für Fahrzeugräder nach einem der vorhergehenden Ansprüche, wobei die vernetzbare Elastomerzusammensetzung ein Vulkanisationsmittel in einer Menge umfasst, die, ausgedrückt in phr Schwefel, größer als 1,5 phr, vorzugsweise größer als 2,5 phr ist.

14. Reifen für Fahrzeugräder nach einem der vorhergehenden Ansprüche, wobei die vernetzbare Elastomerzusammensetzung ein Vulkanisationsmittel in einer Menge umfasst, die, ausgedrückt in phr Schwefel, kleiner als oder gleich 5 phr ist.

15. Reifen für Fahrzeugräder nach einem der vorhergehenden Ansprüche, wobei die Lage aus vernetztem Elastomermaterial einen Wert des dynamischen Elastizitätsmoduls E' aufweist, der bei 23 °C und einer Frequenz von 10 Hz größer als 9,00 MPa ist.

16. Reifen für Fahrzeugräder nach einem der vorhergehenden Ansprüche, wobei die Lage aus vernetztem Elastomermaterial einen Reißfestigkeitswert aufweist, der bei 23 °C größer als oder gleich 53 N/mm, vorzugsweise größer als 58 N/mm ist.

17. Reifen für Fahrzeugräder nach einem der vorhergehenden Ansprüche, wobei die Lage aus vernetztem Elastomermaterial einen Bruchdehnungswert aufweist, der gleich oder größer als 250 %, vorzugsweise größer als 280 % ist.

18. Reifen für Fahrzeugräder nach einem der vorhergehenden Ansprüche, wobei die Lage aus vernetztem Elastomermaterial einen Wert der statischen Belastung bei 100 % Dehnung (CA1) aufweist, der größer als oder gleich 5 MPa ist.

19. Reifen für Fahrzeugräder nach einem der vorhergehenden Ansprüche, wobei der mindestens eine Abriebschutzstreifen (105, 15) mindestens an einer axial äußeren Position in Bezug auf die ringförmige Verstärkungsstruktur (103, 9) angebracht ist und wobei der mindestens eine Abriebschutzstreifen (105, 15) sich mindestens von der Seitenwand (108) bis zum radial unteren Abschnitt der ringförmigen Verstärkungsstruktur (103, 9) erstreckt.

20. Reifen für Fahrzeugräder nach einem der vorhergehenden Ansprüche, wobei der mindestens eine Abriebschutzstreifen (105, 15) auf eine solche Weise angebracht ist, dass er die ringförmige Verstärkungsstruktur (103, 9) entlang der radial unteren und axial inneren und äußeren Bereiche der ringförmigen Verstärkungsstruktur (103, 9) umhüllt.

## Revendications

1. Pneu (100) pour roues de véhicule comprenant :
- une structure de carcasse comprenant au moins une couche de carcasse (101) ayant des bords latéraux opposés associés à une structure de renforcement annulaire relative (103, 9) ;
- une bande de roulement (109, 8) appliquée dans une position radialement externe par rapport à ladite structure de carcasse ;
- une paire de flancs (108) appliqués latéralement sur des côtés opposés par rapport à ladite structure de carcasse ;
- au moins une bande anti-abrasive (105, 15) appliquée dans une position externe de chacune desdites structures de renforcement annulaires (103, 9) ;
**caractérisé en ce que** ladite au moins une bande antiabrasive comprend un matériau élastomère réticulé obtenu par réticulation d'une composition élastomère réticulable comprenant des fibres inorganiques de silicate de magnésium et/ou d'aluminium ayant des dimensions nanométriques, où ledit matériau élastomère réticulé a une valeur de module dynamique élastique E', à 70°C et à une fréquence de 10 Hz, supérieure à environ 8,00 Mpa.

2. Pneu pour roues de véhicule selon la revendication 1, dans lequel ladite composition élastomère réticulable comprend (a) un polymère élastomère diénique.

3. Pneu pour roues de véhicule selon la revendication 1, dans lequel ladite composition élastomère réticulable comprend (b) des fibres inorganiques de silicate de magnésium et/ou d'aluminium ayant un diamètre inférieur à 500 nm.

4. Pneu pour roues de véhicule selon la revendication 1, dans lequel ladite composition élastomère réticulable comprend (b) des fibres inorganiques de silicate de magnésium et/ou d'aluminium ayant un diamètre inférieur à 100 nm.

5. Pneu pour roues de véhicule selon la revendication 4, dans lequel ladite composition élastomère réticulable comprend (b) des fibres inorganiques de silicate de magnésium et/ou d'aluminium ayant un diamètre allant d'environ 5 à environ 50 nm.

6. Pneu pour roues de véhicule selon la revendication 1, dans lequel ladite composition élastomère réticulable comprend (b) des fibres inorganiques de silicate de magnésium et/ou d'aluminium ayant une longueur inférieure ou égale à environ 10 µm.

7. Pneu pour roues de véhicule selon la revendication 6, dans lequel ladite composition élastomère réticulable comprend (b) des fibres inorganiques de silicate de magnésium et/ou d'aluminium ayant une longueur allant d'environ 0,2 à environ 5 µm.

8. Pneu pour roues de véhicule selon l'une quelconque des revendications précédentes, dans lequel lesdites fibres inorganiques sont choisies dans le groupe constitué de fibres de sépiolite, de fibres de palygorskite, ou de mélanges de celles-ci.

9. Pneu pour roues de véhicule selon la revendication 8, dans lequel lesdites fibres inorganiques sont des fibres de sépiolite.

10. Pneu pour roues de véhicule selon l'une quelconque des revendications précédentes, dans lequel lesdites fibres inorganiques sont présentes dans ladite composition élastomère réticulable en une quantité allant d'environ 1 phr à environ 20 phr.

11. Pneu pour roues de véhicule selon la revendication 10, dans lequel lesdites fibres inorganiques sont présentes dans ladite composition élastomère réticulable en une quantité allant d'environ 3 phr à environ 15 phr.

12. Pneu pour roues de véhicule selon l'une quelconque des revendications précédentes, dans lequel ladite composition élastomère réticulable comprend au moins une charge de renforcement supplémentaire, en une quantité allant d'environ 0,1 à environ 120 phr.

13. Pneu pour roues de véhicule selon l'une quelconque des revendications précédentes, dans lequel ladite composition élastomère réticulable comprend un agent de vulcanisation, en une quantité, exprimée en phr de soufre, supérieure à 1,5 phr, de préférence supérieure à 2,5 phr.

14. Pneu pour roues de véhicule selon l'une quelconque des revendications précédentes, dans lequel ladite composition élastomère réticulable comprend un agent de vulcanisation, en une quantité, exprimée en phr de soufre, inférieure ou égale à 5 phr.

15. Pneu pour roues de véhicule selon l'une quelconque des revendications précédentes, dans lequel ladite couche de matériau élastomère réticulé a une valeur de module dynamique élastique E', à 23°C et à une fréquence de 10 Hz, supérieure à 9,00 MPa.

16. Pneu pour roues de véhicule selon l'une quelconque des revendications précédentes, dans lequel ladite couche de matériau élastomère réticulé a une valeur de résistance à la déchirure à 23°C supérieure ou égale à 53 N/mm, de préférence supérieure à 58 N/mm.

17. Pneu pour roues de véhicule selon l'une quelconque des revendications précédentes, dans lequel ladite couche de matériau élastomère réticulé a une valeur d'allongement à la rupture supérieure ou égale à 250%, de préférence supérieure à 280%.

18. Pneu pour roues de véhicule selon l'une quelconque des revendications précédentes, dans lequel ladite couche de matériau élastomère réticulé a une valeur de charge statique à 100% d'allongement (CA1) supérieure ou égale à 5 Mpa.

19. Pneu pour roues de véhicule selon l'une quelconque des revendications précédentes, dans lequel ladite au moins une bande anti-abrasive (105, 15) est appliquée au moins dans une position axialement externe par rapport à la structure de renforcement annulaire (103, 9), et dans lequel ladite au moins une bande anti-abrasive (105, 15) s'étend au moins à partir du flanc (108) vers la partie radialement inférieure de la structure de renforcement annulaire (103, 9).

20. Pneu pour roues de véhicule selon l'une quelconque des revendications précédentes, dans lequel ladite au moins une bande anti-abrasive (105, 15) est appliquée de manière à envelopper la structure de renforcement annulaire (103, 9) le long des zones radialement inférieure et axialement interne et externe de la structure de renforcement annulaire (103, 9).
